# NEW EUROPEAN PATENT SPECIFICATION

(11) **EP 1 585 387 B3**
(45) Date of publication of this specification: **16.06.2010**
(45) Mention of the grant of the patent: 05.12.2007
(21) Application number: 03779726.3
(22) Date of filing: 19.12.2003
(51) Int. Cl.: A01K 1/02, E04H 5/08

(54) **STY PARTITIONING SECTION**
TRENNWANDTEIL FÜR SCHWEINESTÄLLE
SECTION DE CLOISON POUR ETABLE A COCHONS

(30) Priority: 18.01.2003 DK 200300024 U
(43) Date of publication of application: 19.10.2005
(73) Proprietor: CHIMA A/S, 4300 Holbaek (DK)
(72) Inventor: RASMUSSEN, Henrik, DK-4500 Nykobing Sjaelland (DK)
(74) Representative: Nielsen, Leif
(86) International application number: PCT/DK2003/000868
(87) International publication number: WO 2004/084623

(56) References cited:
- WO-A1-95/12305
- CH-A5- 689 218
- FR-A1- 2 628 288

## Description

### Field of Application of the invention

The invention concerns a twist and deflection resistant section for sty partitioning, primarily in pigstys.

The invention is typically used as sty partitioning between two U-posts, which are fixed, but may also be used for freely suspended gates without extra reinforcement

The invention is particularly reinforced so that a very solid and twist resistant solution is achieved.

The invention may be pre-mounted by clicking the sections together so that they subsequently do not slide or twist away from each other.

### Prior Art

Nowadays, sty partitionings are known in the form of lattice, sheet or planks that are assembled at a given level, see e.g. FR-A-2 628 288.

Planks are typically used mounted between two U-posts, where the number of planks upon each other provide the desired height These partitionings are often to be reinforced with base fittings between the posts in order not to get too large deflection when the pigs are lying up to the sty partitioning.

The same planks are also used when gates are to be made. In case of gates it is not possible to mount extra base fittings, why most often a strong deflection and twisting of the gate occurs.

The planks may nowadays be assembled in different ways by moving them together in longitudinal direction or by clicking them together. Other types abut by a tongue and groove assembly. In general for all cases, the permanent joint is only achieved by mounting U-sections.

### The Technical Problem to Be Solved

By the invention it is intended to provide a section or profile which can be mounted as sty partitioning with a very high degree of deflection and torsional stability.

Today, sty partitionings are mounted with base fittings and reinforcements of different kinds, as planks and sections are not sufficiently reinforced by themselves. Typically, aftersome time a permanent deformation of the sty partitioning appears, as the structure of the section does not provide sufficiently rigidity by itself.

In case of gates, the problem is particularly accentuated as the animals are lying up to the gate and that the gate, due to lack of stability, either opens inadvertently or is strongly deformed. After some time, the planks from which the gate is made will be displaced in longitudinal direction and simultaneously assume a permanent deformation as a consequence. Here it will be necessary to mount more reinforcements in the form of e.g. U-irons or a diagonal reinforcement of the gate.

The planks of today are not sufficiently resistant to blows from the animals'hoofs. Most often, this appears as a deformation or as a hole in the side of the plank

During mounting, it is inexpedient that planks can slide or fall from each other as several planks are to be mounted upon each other every time.

The sty partitioning according to the invention consist of transverse, internal lamellae in the plank which by means of their orientation and disposition constitute a twist and deflection resistant solution as claimed in claim 1.

### List of Figures

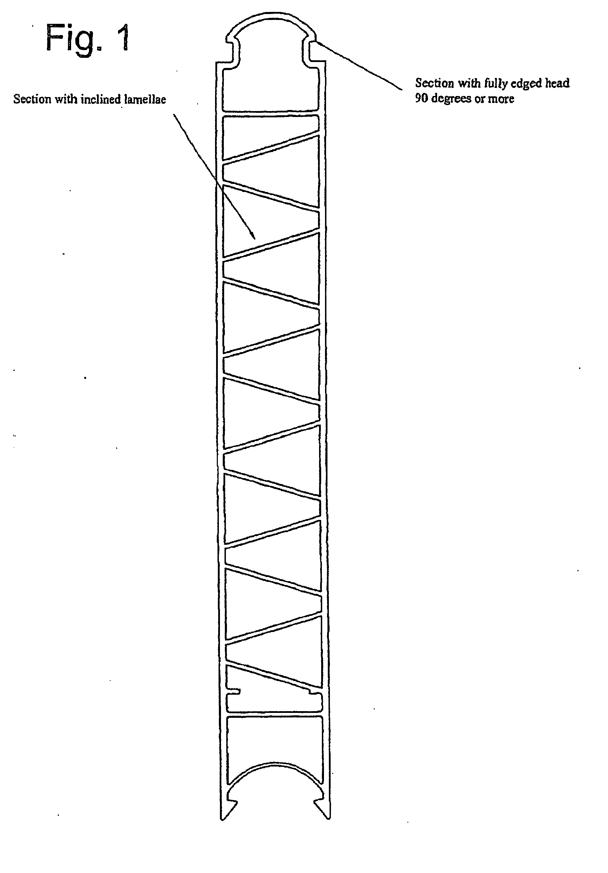

- Fig. 1:: Section for sty partitioning with inclined lamel- lae and fully edged head
- Fig. 2:: Section with indication of inclining lamellae and their angles
- Fig. 3:: View of the design of the upper part with indi- cation of angle
- Fig. 4:: Design of the bottom part/bases

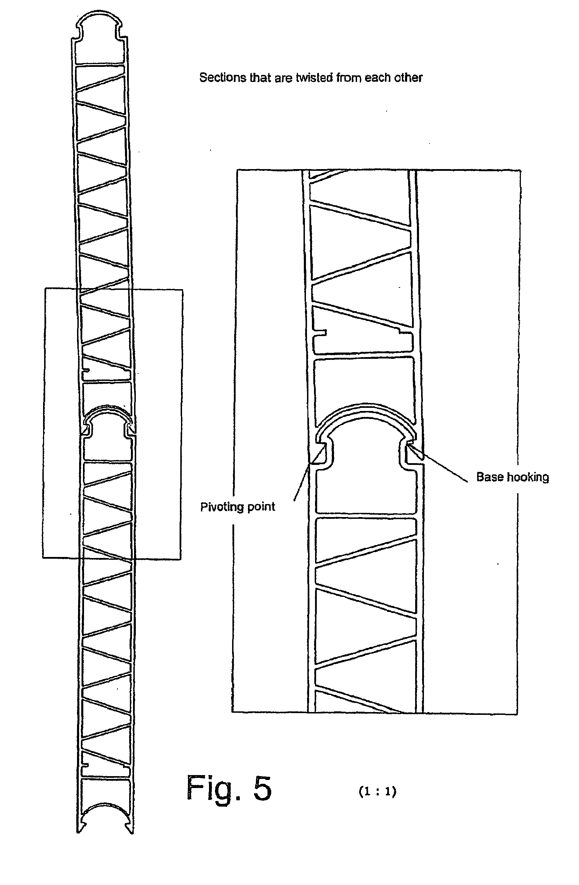

- Fig. 5:: Sections that are clicked together with a view of locking
- Fig. 6:: Propagation of impact force

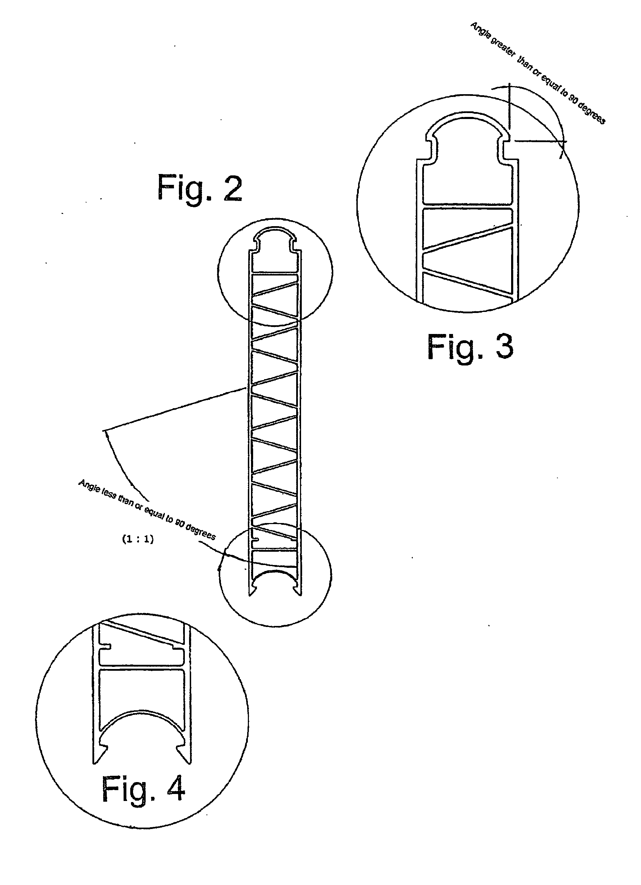

The lamellae are disposed inclining at an angle of less than 90° in relation to the plank sides. See Fig. 2.

The modular structure of the lamellae provides that this pattern can be produced for all heights and widths of planks and simultaneously increased twisting and deflection resistance may be achieved.

The partitioning according to the invention consists of a joining method of two sections so that the upper and lower part remain assembled during preliminary mounting.

The upper part is designed with a sharp-edged section, see Fig. 3, in which the legs of the subsequent section fit in a notch.

The shape of the lower part is made with an angle that allows the lower part to fit in a notch with the upperpart and at the same time to be clamped. See Fig. 4.

### Technical Effect

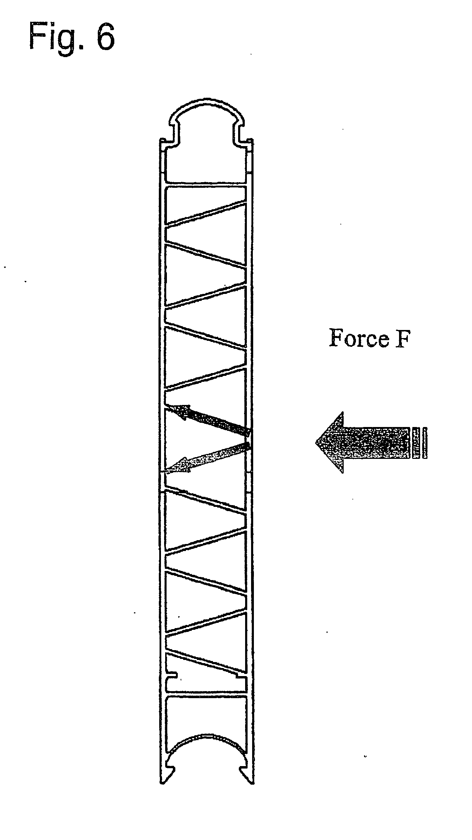

By the internal structure of the invention it is possible to achieve distribution of the forces applied on the section by blows and twisting, see Fig. 6.

By blows, the forces will typically attack the section at an angle of 90° on the side of the section. See Fig. 6. By the new design of the internal structure, this force will propagate at an angle, thus providing that the section is subjected to less stress load.

By twisting, the inclining lamellae imply a kind of honeycomb effect, where the resulting force becomes less than by the traditional structure and thereby put less stress loads on the section.

By designing the upper part with a sharp edge of 90 degrees or more, see Fig. 3, a locking action is achieved so that by assembling the upper part and the lower part remain together.

The base of the lower part is designed with an angle. This angle causes that the bases of the lower part may readily wedge themselves in under the perpendicular upper part, but as soon as it is in place, it locks.

## Claims

1. Section for sty partitioning, wherein the section comprises a plank with sides and transverse lamellae as internal structure, **characterised in that** the transverse lamellae have an angle to the sides of the plank being less than 90 degrees, that each side of an upper part of the plank has an edged notch having an angle of 90 degrees to the side of the plank, and that each side of the lower part of the plank comprises legs with wedge formed protrusions fitting into said notch.

## Patentansprüche

1. Teilstück für Stallabtrennung, wobei das Teilstück eine Planke mit Seitenflächen und Querlamellen als interne Struktur aufweist, **dadurch gekennzeichnet, daß** die Querlamellen mit den Seitenflächen der Planke einen Winkel von weniger als 90° bilden, daß jede Seitenfläche eines oberen Teils der Planke eine mit der Seite der Planke einen Winkel von 90° bildende, keilförmige Nut aufweist, und daß jede Seitenfläche des unteren Teils der Planke Beine mit in die Nut passenden keilförmigen Vorsprüngen umfasst.

## Revendications

1. Section de cloisonnement pour porcherie, la section comprenant une planche présentant des côtés et des lamelles transversales formant sa structure interne **caractérisée en ce que** les lamelles transversales forment un angle de moins de 90 degrés avec les côtés de la planche, que chaque côté d'une partie supérieure de la planche présente une encoche présentant une arête et formant un angle de 90 degrés par rapport au côté de la planche, et que chaque côté de la partie inférieure de la planche comprend des pattes avec des saillies en forme de coin qui s'adaptent dans l'encoche.
